# EUROPEAN PATENT APPLICATION

(11) **EP 2 493 248 A1**
(43) Date of publication of application: **29.08.2012**
(21) Application number: 10840436.9
(22) Date of filing: 03.11.2010
(51) Int. Cl.: H04W 48/20

(54) **EVOLVED PACKET SYSTEM AND METHOD FOR PROCESSING EMERGENCY CALL ATTACHMENT THEREOF**

(30) Priority: 04.01.2010 CN 201010000210
(71) Applicant: ZTE Corporation, Shenzhen, Guangdong 518057 (CN)
(72) Inventor: ZHU, Chunhui, Guangdong 518057 (CN); DU, Zhongda, Guangdong 518057 (CN)
(74) Representative: Pons Ariño, Maria Purificación
(86) International application number: PCT/CN2010/078384
(87) International publication number: WO 2011/079647

(57) **Abstract**

The disclosure discloses an evolved packet system and a method for processing an emergency call attachment thereof, wherein the method comprises: a NodeB selects one PLMN from those Public Land Mobile-communication Networks (PLMN) supporting emergency calls according to an emergency call request message received from a UE which is in a restricted state; the NodeB sends information of the selected PLMN to the UE through a Radio Resource Control (RRC) connection establishment message; and the UE uses the information to establish attachment with the selected PLMN. In the disclosure, it can be ensured that the PLMN to which the User Equipment (UE) selects to attach supports an emergency call, and it can be ensured that Kasmes generated by the UE and the Mobility Management Entity (MME) are consistent during the Authentication and Key Agreement (AKA) flow, so that the success of the emergency call can be guaranteed.

## Description

### Field of the Invention

The disclosure relates to the field of communications, in particular to an evolved packet system and a method for processing an emergency call attachment thereof.

### Background of the Invention

As the core of the new generation communication network, IP Multimedia Core Network Subsystem (IMS) employs a Session Initiation Protocol (SIP) system. Independent from access, SIP has various capabilities, such as, media service control function and bearer separation, call and session separation, application and service separation, service and network separation, and service convergence between the mobile network and the Internet network.

As IMS is independent from access, emergency calls (EMC) in IMS may be built in a System Architecture Evolution (SAE) network. Wherein, SAE also may be called Evolved Packet System (EPS).

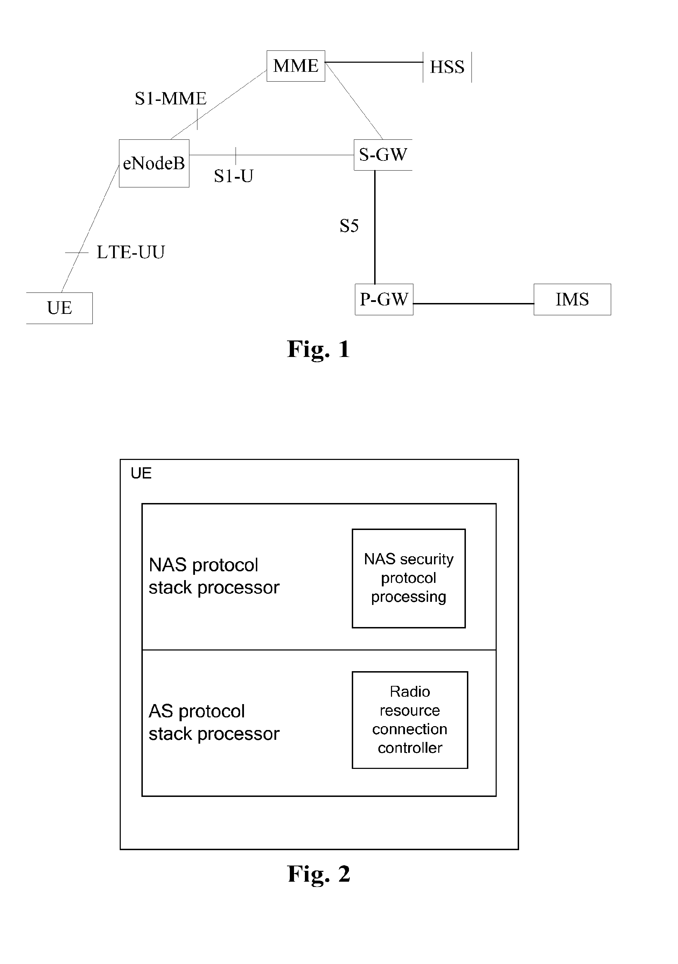

Fig. 1 shows an architecture diagram of an EPS accessing an IMS in the related technologies, and in the drawing, main network elements involved in the process by which a User Equipment (UE) accesses an emergency call of an IMS through an SAE are shown, comprising: network elements in the SAE network part and network elements in the IMS emergency service part.

Wherein, the network elements in the SAE network part are configured to provide bearer management and mobility management for the bottom layer. The network elements in the SAE network part comprise: an enhanced NodeB (eNodeB), a Mobility Management Entity (MME) and a User Plane Data Routing Processing Network Element (SAE GW); the SAE GW comprises: a Packet Data Network Gateway (P-GW) and a Serving Gateway (S-GW); Policy and Charging Rules Function (PCRF) is an important function entity of the PCC architecture and configured to control the obtaining, assembling, sending or the like of the IP-Connectivity Access Network (IP-CAN) policy and charging rules. Wherein, IP-CAN may be a set of equipment and interfaces in the EPS. MME is responsible for managing and storing contexts of the UE (for example, UE ID/user ID, mobility management state, user security parameter or the like), allocating an temporary ID for the user, and responsible for authenticating the UE when the UE resides in a tracing region or network. Home Subscriber Server (HSS) is configured to save user data. P-GW is a mobile anchor inside the SAE system and a border gateway between the SAE and the Packet Data Network (PDN), and is responsible for executing functions, such as, access of PDN and data forwarding between the SAE and the PDN.

Fig. 2 shows a diagram of an AS and an NAS in the UE according to the related technologies. The communication protocol stack of the UE consists of two parts: Non Access Stratum (NAS) protocol processor and an Access Stratum (AS) protocol processor, respectively. The NAS protocol processor contains an NAS security protocol processing function and an NAS key calculation function. The AS protocol processor has a radio resource connection controller which is responsible for functions, such as establishment, modification, release and reestablishment of a Radio Resource Control (RRC) connection of the AS.

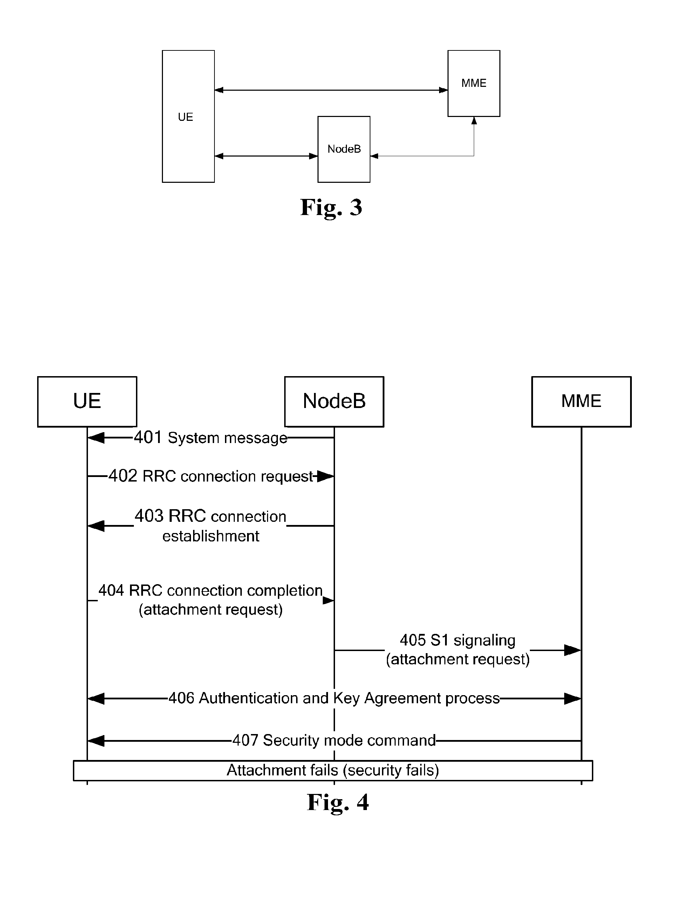

Fig. 3 shows a diagram of interaction between UE and a NodeB/mobility management entity according to the related technologies, the NAS interaction between the UE and the MME is performed through the radio connection between the UE and the NodeB and the interface S1 between the NodeB and the MME. The UE and the NodeB communicate with each other through a radio interface, and the UE communicates with the MME through an interface inside the network. Generally, the communication protocol between the UE and the NodeB is an AS protocol, while the communication protocol between the UE and the MME is an NAS protocol. The NAS messages related to the NAS protocol are routed by the NodeB and are transparent to the NodeB.

The eNodeB will broadcast whether the cell supports an emergency call by a UE which is in a restricted state in a system message. Simultaneously, the specific cell or NodeB may be shared by different operators, and the UE may distinguish the operation of the shared network from the Public Land Mobile-communication Network (PLMN) ID list broadcasted in the system message. However, as there is only one bit of information about whether an emergency call is supported, it is unable to show exactly which PLMN supports an emergency call. The bit setup rule is that the system message will broadcast that the cell supports an emergency call as long as any one PLMN supports an emergency call.

When the UE that is in the restricted service state initiates an emergency call, an RRC connection needs to be established between the UE and the NodeB first to further transfer the NAS signaling and the AS signaling. An RRC connection request message mainly contains two pieces of information: one is the ID of the UE, and the other is the cause for initiating a call. When the UE initiates an emergency call, if the UE is in the restricted service state, the ID of the UE is one random number instead of an S-TMSI. In addition, the cause for initiating a call is "Emergency Call."

Fig. 4 shows a flow chart of handling an emergency call attachment process according to the related technologies, comprising the following steps:
S401: A system message sent by the NodeB contains one bit used for broadcasting that the current cell supports an emergency call, and the broadcast also contains IDs of all those PLMNs sharing the NodeB currently, i.e., a Public Land Mobile-Communication Networks (PLMN) ID list of the PLMNs to which the NodeB is connected; however, actually, some of the PLMNs support an emergency call, and some of the PLMNs do not support an emergency call.
S402: The UE, which is in the restricted state and needs to initiate an emergency call, transmits an RRC connection establishment request message to the NodeB according to the broadcast, wherein the message contains the ID of the UE, which is one random number, and the cause for initiating a call, which is emergency.
S403: The NodeB sends an RRC connection establishment message to the UE.
S404: The UE selects one of the PLMNs to access according to the broadcast message received in S401, and sends an RRC connection completion message to the NodeB, wherein the RRC connection completion message contains an NAS message: attachment request. In this flow, the PLMN selected by the UE does not support an emergency call actually.
S405: After receiving the message, the NodeB finds out that the selected PLMN does not support an emergency call, so it selects one PLMN supporting emergency calls for the UE, and routes the NAS message (attachment request) to the MME of the PLMN supporting emergency calls.
S406: The MME initiates an Authentication and Key Agreement (AKA) process, both the UE and the MME generate respective Kasmes (root keys), the generation of Kasmes is related to the PLMN ID, therefore Kasmes generated by the UE and the MME are different.
S407: The MME sends a Security Mode Command (SMC) message to the UE, as the Kasmes are different, the SMC fails, and thus the UE attachment fails.

Emergency call service is a service the communication networks are legally required to support, however, in the related technologies, when the PLMN selected by the UE does not support an emergency call, the emergency call fails, and thus the network is unable to support the service.

### Summary of the Invention

The main purpose of the disclosure is to provide an evolved packet system and a method for processing an emergency call attachment thereof, to at least solve the above problem.

According to one aspect of the disclosure, a method for processing an emergency call attachment of an evolved packet system is provided, comprising: according to an emergency call request message received from a user equipment (UE) which is in a restricted state, a NodeB selecting one from a plurality of Public Land Mobile-communication Networks (PLMNs)supporting emergency calls; the NodeB sending information of the selected PLMN to the UE through a Radio Resource Control (RRC) connection establishment message; and the UE using the information to establish attachment with the selected PLMN.

Preferably, the step of the NodeB sending information of the selected PLMN to the UE through an RRC connection establishment message comprises: the NodeB sending an index number of the selected PLMN in a PLMN ID list of all PLMNs to which the NodeB is connected in a system message to the UE through an RRC connection establishment message.

Preferably, the step of the UE using the information to establish attachment with the selected PLMN comprises: the UE analyzing the index number from the received RRC connection establishment message; the UE converting the index number into a PLMN ID; the UE sending an RRC connection completion message carrying a Non Access (NAS) message to the NodeB; the NodeB sending the NAS message to a Mobility Management Entity (MME) of the selected PLMN; and the UE using the PLMN ID of the selected PLMN to generate a Kasme, and using the generated Kasme to verify authentication and key agreement with the MME to complete the attachment.

According to one aspect of the disclosure, a method for processing an emergency call attachment of an evolved packet system is provided, comprising: according to an emergency call request message received from a UE which is in a restricted state, a NodeB sending information of a plurality of PLMNs supporting emergency calls to the UE through an RRC connection establishment message; the UE selecting one of the plurality of PLMNs supporting emergency calls according to the information; and the UE establishing attachment with the selected PLMN.

Preferably, the step that of, according to an emergency call request message received from a UE which is in a restricted state, a NodeB sending information of a plurality of PLMNs supporting emergency calls to the UE through an RRC connection establishment message comprises: the NodeB sending index numbers of the plurality of PLMNs supporting emergency calls to the UE through an RRC connection establishment message.

Preferably, the step of UE selecting one of the plurality of PLMNs supporting emergency calls according to the information comprises: the UE analyzing the index numbers from the received RRC connection establishment message; the UE converting the index numbers into PLMN IDs; and the UE selecting one from the plurality of PLMNs identified by the PLMN IDs obtained through conversion.

Preferably, the step of the UE using the information to establish attachment with the selected PLMN comprises: the UE sending the PLMN ID of the selected PLMN to the NodeB through an RRC connection completion message, wherein the RRC connection completion message carries an NAS message; the NodeB sending the NAS message to a MME of the selected PLMN; and the NodeB using the PLMN ID of the selected PLMN to generate a Kasme, and using the generated Kasme to verify authentication and key agreement with the MME to complete the attachment.

According to another aspect of the disclosure, an evolved packet system is provided, comprising: a NodeB, configured to, according to an emergency call request message received from a UE which is in a restricted state, select one from a plurality of PLMNs supporting emergency calls, and also configured to send information of the selected PLMN to the UE through an RRC connection establishment message; and the UE, configured to use the information to establish attachment with the selected PLMN.

Preferably, the NodeB comprises: a first sending module, configured to send an index number of the selected PLMN in a PLMN ID list in a system message to the UE through the RRC connection establishment message, wherein the PLMN ID list is a list consisting of PLMN IDs of all PLMNs to which the NodeB is connected, and also configured to send an NAS message in an RRC connection completion message from the UE to an MME of the selected PLMN; and the UE comprises: an analyzing module, configured to analyze the index number from the received RRC connection establishment message and to convert the index number into a PLMN ID; a second sending module, configured to send the RRC connection completion message carrying the NAS message to the NodeB; and an execution module, configured to use the PLMN ID of the selected PLMN to generate a Kasme, and to use the generated Kasme to verify authentication and key agreement with the MME to complete the attachment.

According to another aspect of the disclosure, an evolved packet system is provided, comprising: a NodeB, configured to, according to an emergency call request message received from a UE which is in a restricted state, send information of a plurality of PLMNs supporting emergency calls to the UE through an RRC connection establishment message; and the UE, configured to select one of the plurality of PLMNs supporting emergency calls according to the information, and also configured to establish attachment with the selected PLMN.

Preferably, the NodeB comprises: a first sending module, configured to send index numbers of the plurality of PLMNs supporting emergency calls to the UE through the RRC connection establishment message, and also configured to send an NAS message in an RRC connection completion message from the UE to an MME of the PLMN selected by the UE in the RRC connection completion message; and the UE comprises: an analyzing module, configured to analyze the index numbers from the received RRC connection establishment message and convert the index numbers into PLMN IDs; a selection module, configured to select one from the plurality of PLMNs identified by the PLMN IDs obtained through conversion; a second sending module, configured to send the PLMN ID of the selected PLMN to the NodeB through the RRC connection completion message, wherein the RRC connection completion message carries the NAS message; and an execution module, configured to use the PLMN ID of the selected PLMN to generate a Kasme, and to use the generated Kasme to verify authentication and key agreement with the MME to complete the attachment.

Through the disclosure, as the NodeB selects one PLMN from those PLMNs supporting emergency calls after receiving an emergency call request from the UE which is in the restricted service state and notifies the UE, the problem in the related technologies, i.e., the emergency call fails and thus the network is unable to support the emergency call service when the PLMN selected by the UE does not support an emergency call, is solved, therefore, it can be ensured that the PLMN to which the UE selects to attach supports emergency calls, and it can be ensured that Kasmes generated by the UE and the MME are consistent during the AKA flow, so that the success of the emergency call can be guaranteed.

### Brief Description of the Drawings

The drawings described herein are provided for further understanding of the disclosure and form one part of the application, the exemplary embodiments of the disclosure and the descriptions thereof are used for explaining the disclosure and form no improper limit for the disclosure. In the drawings:
Fig. 1 shows an architecture diagram of an EPS accessing an IMS according to the related technologies;
Fig. 2 shows a diagram of an AS and an NAS according to the related technologies;
Fig. 3 shows the diagram of interaction between UE and a NodeB/MME according to the related technologies;
Fig. 4 shows a flow chart of handling an emergency call attachment process according to the related technologies;
Fig. 5 shows the flow chart of a method for processing an emergency call attachment of an evolved packet system according to one embodiment of the disclosure;
Fig. 6 shows the flow chart of a method for processing an emergency call attachment of an evolved packet system according to another embodiment of the disclosure;
Fig. 7 shows the flow chart of a method for processing an emergency call attachment according to preferred embodiment 1 of the disclosure;
Fig. 8 shows the flow chart of a method for processing an emergency call attachment according to preferred embodiment 2 of the disclosure;
Fig. 9 shows the diagram of an evolved packet system according to one embodiment of the disclosure;
Fig. 10 shows the diagram of an evolved packet system according to another embodiment of the disclosure.

### Detailed Description of the Embodiments

The disclosure will be described in details below with reference to drawings and embodiments. It should be noted that embodiments in the application and features in the embodiments may be combined if not conflicted.

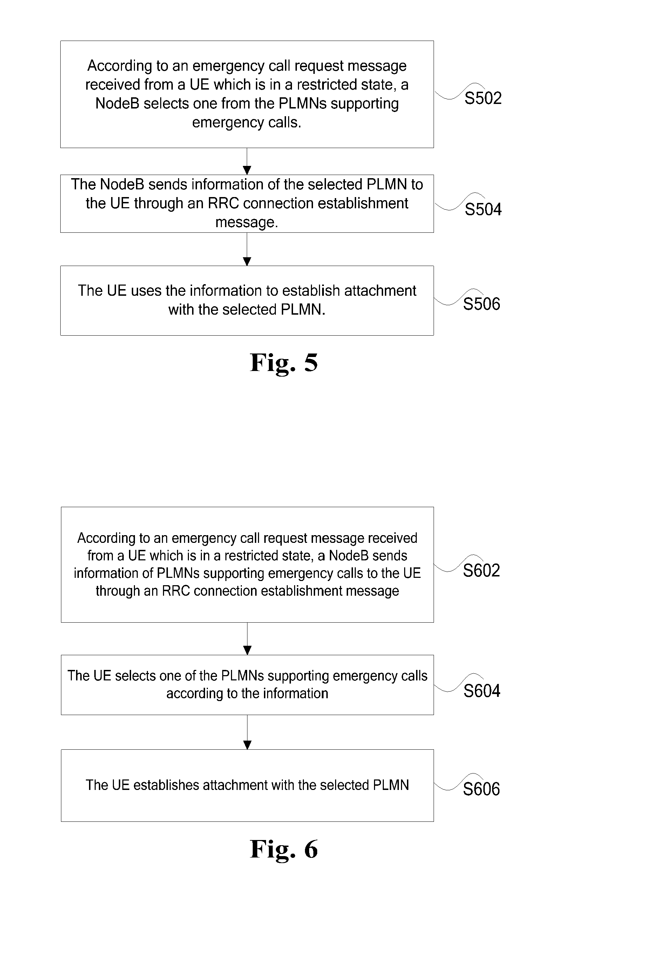

Fig. 5 shows the flow chart of a method for processing an emergency call attachment of an evolved packet system according to one embodiment of the disclosure, comprising the following steps:
S502: According to an emergency call request message received from a UE which is in a restricted state, a NodeB selects one PLMN from those PLMNs supporting emergency calls.
S504: The NodeB sends information of the selected PLMN to the UE through an RRC connection establishment message.
S506: The UE uses the information (i.e., information of the selected PLMN) to establish attachment with the selected PLMN.

In the embodiment, as the NodeB, upon receiving an emergency call request from the UE which is in the restricted service state, selects one PLMN from those PLMNs supporting emergency calls and notifies the UE, the problem in the related technologies, i.e., the emergency call fails and thus the network is unable to support the emergency call service when the PLMN selected by the UE does not support an emergency call, is solved. The application of the embodiment can ensure that the PLMN to which the UE selects to attach supports an emergency call, and that Kasmes generated by the UE and the MME are consistent during the AKA flow, so that the success of the emergency call can be guaranteed.

Preferably, S504 comprises: the NodeB sends an index number of the selected PLMN in a PLMN ID list in a system message to the UE through an RRC connection establishment message, wherein the PLMN ID list is a list consisting of PLMN IDs of all PLMNs to which the NodeB is connected. That is, the information of the selected PLMN is the index number of the selected PLMN in the PLMN ID list in the system message, wherein the PLMN ID list is a list consisting of PLMN IDs of all PLMNs to which the NodeB is connected.

S506 comprises: the UE analyzes the index number from the received RRC connection establishment message; the UE converts the index number into PLMN ID; the UE sends an RRC connection completion message carrying an NAS message to the NodeB; the NodeB sends the NAS message to an MME of the selected PLMN; and the UE uses the PLMN ID of the selected PLMN to generate a Kasme, and uses the generated Kasme to verify AKA with the MME to complete the attachment.

The preferred embodiment provides one specific solution of a method for processing an emergency call attachment. After receiving an emergency call request initiated by the UE, the NodeB selects one PLMN supporting emergency calls in the restricted state, and then notifies the UE of the ID information of the selected PLMN through an RRC connection establishment message, and the UE completes the calculation of the NAS key according to the PLMN ID information and finally completes the attachment of the UE.

Fig. 6 shows the flow chart of a method for processing an emergency call attachment of an evolved packet system according to another embodiment of the disclosure, comprising the following steps:
S602: According to an emergency call request message received from a UE which is in a restricted state, a NodeB sends information of those PLMNs supporting emergency calls to the UE through an RRC connection establishment message.
S604: The UE selects one of the PLMNs supporting emergency calls according to the received information.
S606: The UE establishes attachment with the selected PLMN.

In the embodiment, as the NodeB, upon receiving an emergency call request received from a UE which is in the restricted service state, sends to the UE information of all the PLMNs supporting emergency calls and the UE selects one of the PLMNs to execute attachment, the problem in the related technologies, i.e., the emergency call fails and thus the network is unable to support the emergency call service when the PLMN selected by the UE does not support an emergency call, is solved. The application of the embodiment can ensure that the PLMN to which the UE selects to attach supports an emergency call, and that Kasmes generated by the UE and the MME are consistent during the AKA flow, so that the success of the emergency call can be guaranteed.

Preferably, S602 comprises: the NodeB sends index numbers of those PLMNs supporting emergency calls to the UE through an RRC connection establishment message. That is, the information of the PLMNs supporting emergency calls has index numbers of all the PLMNs supporting emergency calls.

S604 comprises: the UE analyzes the index numbers of the PLMNs supporting emergency calls from the received RRC connection establishment message; the UE converts the index numbers of the PLMNs supporting emergency calls into PLMN IDs; and the UE selects one PLMN from the PLMNs identified by the PLMN IDs obtained through conversion.

S606 comprises: the UE sends the PLMN ID of the selected PLMN to the NodeB through an RRC connection completion message, wherein the RRC connection completion message carries an NAS message; the NodeB sends the NAS message to the MME of the selected PLMN; and the NodeB uses the PLMN ID of the selected PLMN to generate a Kasme, and uses the Kasme generated by the selected PLMN ID to verify AKA with the MME to complete the attachment.

The preferred embodiment provides one specific solution of a method for processing an emergency call attachment. After receiving an emergency call request initiated by the UE, the NodeB notifies the UE of the information of all the PLMNs supporting emergency calls in the restricted state through an RRC signaling, and the UE selects one PLMN from the PLMN list provided by the NodeB to execute the emergency service, and then completes the calculation of the NAS key and finally completes the attachment of the UE.

In the disclosure, the security protocol flow of the NAS between the UE and the MME is also transparent to the NodeB.

### Preferred embodiment 1

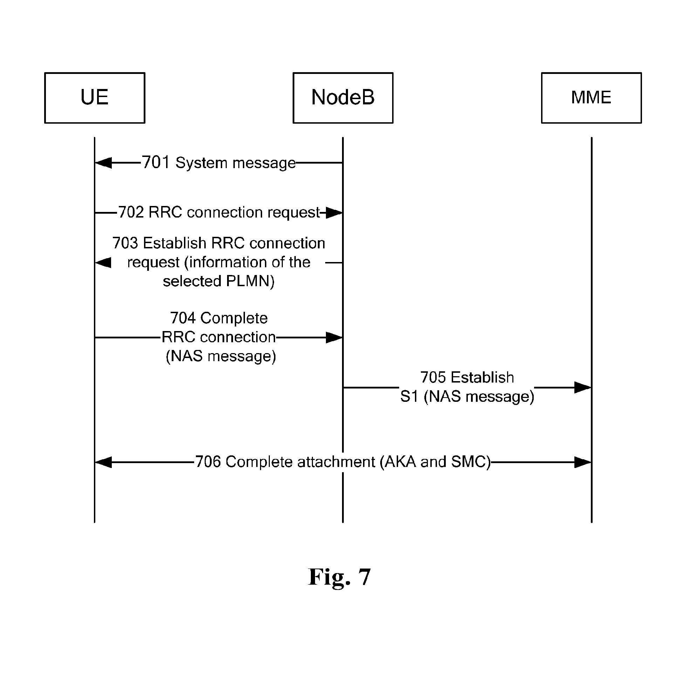

As shown in Fig. 7, in preferred embodiment 1, the NodeB is shared by a plurality of PLMNs, at least one PLMN of which supports the emergency service. The UE is in the restricted service state, that is, it can only receive the emergency call service provided by the network, instead of enjoying normal services provided by the network.

S701: A system message sent by the NodeB contains one bit used for broadcasting that the current cell supports an emergency call, and the broadcast also contains PLMN IDs of all those PLMNs sharing the NodeB currently, i.e., a PLMN ID list of the PLMNs to which the NodeB is connected.

S702: The UE, which is in the restricted service state and needs to initiate an emergency call, transmits an RRC connection establishment request message to the NodeB according to the broadcast, wherein the message contains the ID of the UE, which is one random number, and the cause for initiating a call, which is emergency.

S703: After receiving the RRC connection request, the NodeB may determine that the UE initiating the emergency call is in the restricted service state based on the user ID being a random number and the cause being emergency which are received in S702. As network sharing exists in the cell, the NodeB selects one PLMN supporting emergency calls. Then, the NodeB sends the index number of the selected PLMN in the PLMN list in the system message to the UE through an RRC connection establishment message.

S704: The AS of the UE takes the index number of the PLMN from the RRC connection request message, converts it to PLMN ID, and notifies the NAS of the PLMN ID. An RRC connection completion message is sent, which contains an NAS message: attachment request.

S705: According to the request of the user, the NodeB sends through an interface S1 the NAS message to the MME of the PLMN supporting emergency calls, which is selected by the UE.

S706: In the subsequent AKA flow of the NAS, the UE obtains the Kasme of the NAS through calculation after successful authentication. As the MME is consistent with the UE in terms of selection of the PLMN, the Kasme generated by the MME is consistent with that generated by the UE, which guarantees normal operating of the subsequent security flow of the NAS and the AS and the security of sessions between the UE and the network. The UE attachment flow is completed.

### Preferred embodiment 2

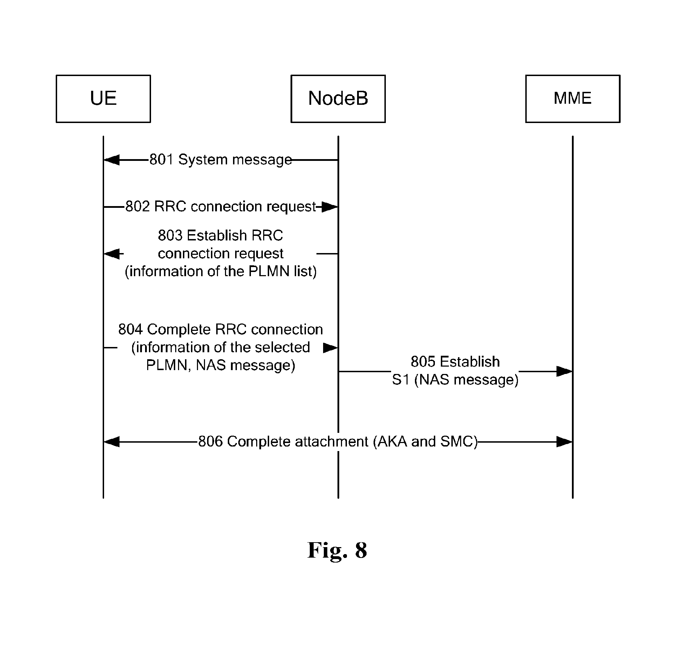

As shown in Fig. 8, in preferred embodiment 2, the NodeB is shared by a plurality of PLMNs, at least one PLMN of which supports the emergency service. The UE is in the restricted service state, that is, it can only receive the emergency call service provided by the network, instead of enjoying normal services provided by the network.

S801: A system message sent by the NodeB contains one bit used for broadcasting that the current cell supports an emergency call, and the broadcast also contains PLMN IDs of all the PLMNs sharing the NodeB currently, i.e., a PLMN ID list of the PLMNs to which the NodeB is connected.

S802: The UE, which is in the restricted service state and needs to initiate an emergency call, transmits an RRC connection establishment request message to the NodeB according to the broadcast, wherein the message contains the ID of the UE, which is one random number, and the cause for initiating a call, which is emergency.

S803: After receiving the RRC connection request, the NodeB may determine that the UE initiating the emergency call is in the restricted service state based on the user ID being a random number and the cause being emergency which are received in S802. As network sharing exists in the cell, the NodeB sends the PLMN list information of those PLMNs supporting emergency calls, i.e., the index numbers of the PLMNs, to the UE in an RRC connection establishment message sent to the UE.

S804: The AS of the UE takes the index numbers of the PLMN from the RRC connection request message, converts them to PLMN IDs, and notifies the NAS of the PLMN IDs. The AS of the UE determines the PLMN to be selected according to the list information. The information of the PLMN selected by the UE is sent to the NodeB through an RRC connection completion message, and the message also contains the first NAS message sent to the MME by the UE, simultaneously.

S805: After receiving the message, the NodeB routes the NAS message to the MME of the PLMN selected by the UE.

S806: In the subsequent AKA flow of the NAS, the UE obtains the Kasme of the NAS through calculation after successful authentication. As the MME is consistent with the UE in terms of selection of the PLMN, the Kasme generated by the MME is consistent with that generated by the UE, which guarantees normal operating of the subsequent security flow of the NAS and the AS and the security of sessions between the UE and the network. The UE attachment flow is completed.

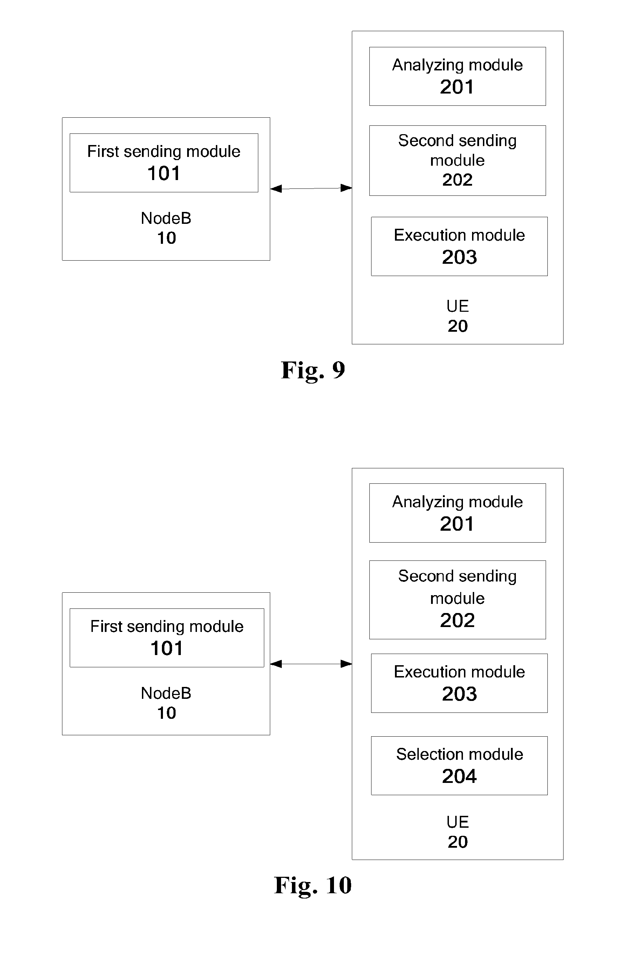

Fig. 9 shows the diagram of an evolved packet system according to one embodiment of the disclosure, comprising: a NodeB 10, configured to, according to an emergency call request message received from a UE 20 which is in a restricted state, select one PLMN from those PLMNs supporting emergency calls and also configured to send information of the selected PLMN to the UE 20 through an RRC connection establishment message; and UE 20, configured to use the information to establish attachment with the selected PLMN.

Preferably, the NodeB 10 comprises: a first sending module 101, configured to send the index number of the selected PLMN in a PLMN ID list in a system message to the UE 20 through an RRC connection establishment message, wherein the PLMN ID list is a list of PLMN IDs of all the PLMNs to which the NodeB is connected, and also configured to send the NAS message in the RRC connection completion message from the UE 20 to an MME of the selected PLMN. The UE 20 comprises: an analyzing module 201, configured to analyze the index number from the received RRC connection establishment message and convert the index number into a PLMN ID; a second sending module 202, configured to send an RRC connection completion message carrying an NAS message to the NodeB 10; and an execution module 203, configured to use the PLMN ID of the selected PLMN to generate a Kasme, and use the generated Kasme to verify AKA with the MME to complete the attachment.

Fig. 10 shows the diagram of an evolved packet system according to another embodiment of the disclosure, comprising: a NodeB 10, configured to, according to an emergency call request message received from a UE which is in a restricted state, send information of those PLMNs supporting emergency calls to the UE through an RRC connection establishment message; and a UE 20, configured to select one PLMN of the PLMNs supporting emergency calls according to the information and also configured to establish attachment with the selected PLMN.

Preferably, the NodeB 10 comprises: a first sending module 101, configured to send the index numbers of those PLMNs supporting emergency calls to the UE 20 through an RRC connection establishment message, and also configured to send the NAS message in the RRC connection completion message from the UE 20 to the MME of the PLMN selected by the UE in the RRC connection completion message. The UE 20 comprises: an analyzing module 201, configured to analyze the index numbers from the received RRC connection establishment message and convert the index numbers into PLMN IDs; a selection module 204, configured to select one PLMN from those PLMNs identified by the PLMN IDs obtained through conversion; a second sending module 202, configured to send the PLMN ID of the selected PLMN to the NodeB through an RRC connection completion message, wherein the RRC connection completion message carries an NAS message; and an execution module 203, configured to use the PLMN ID of the selected PLMN to generate a Kasme, and use the generated Kasme to verify AKA with the MME to complete the attachment.

From the above description, it can be seen that the disclosure realizes the following technical effects:
(1) It can be ensured that the PLMN to which the UE selects to attach supports an emergency call, and it can be ensured that Kasmes generated by the UE and the MME are consistent during the AKA flow, so that the success of the emergency call can be guaranteed.
(2) As the MME is consistent with the UE in terms of selection of the PLMN, the Kasme generated by the MME is consistent with that generated by the UE, which guarantees normal operating of the subsequent security flow of the NAS and the AS and the security of sessions between the UE and the network.

Of course, persons skilled in the field should understand that the above modules or steps of the disclosure could be achieved through general calculating devices, they can be concentrated in a single calculating device or distributed in a network formed by multiple calculating devices, optionally, they can be achieved by program codes that can be executed by calculating devices, thus, they can be stored in storage devices to be executed by calculating devices, and under certain situation, the shown or described steps can be executed according to an order different from the above order, or they can be achieved by respectively making them into many integrated circuit modules or by making multiple modules or steps among them into a single integrated circuit module. In this way, the disclosure is not limited to combinations of any specific hardware and software.

Above contents only describe preferred embodiments of the disclosure and are not used for limiting the disclosure. For persons skilled in the field, the disclosure may have various alternations and changes. Any modifications, equivalent replacements and improvements within the spirit and principle of the disclosure should be contained within the protection scope of the disclosure.

## Claims

1. A method for processing an emergency call attachment of an evolved packet system, **characterized by** comprising:
according to an emergency call request message received from a user equipment (UE) which is in a restricted state, a NodeB selecting one from a plurality of Public Land Mobile-communication Networks (PLMNs) supporting emergency calls;
the NodeB sending information of the selected PLMN to the UE through a Radio Resource Control (RRC) connection establishment message; and
the UE using the information to establish attachment with the selected PLMN.

2. The method according to claim 1, **characterized in that** the NodeB sending information of the selected PLMN to the UE through an RRC connection establishment message comprises: the NodeB sending an index number of the selected PLMN in a PLMN ID list in a system message to the UE through an RRC connection establishment message, wherein the PLMN ID list is a list consisting of PLMN IDs of all PLMNs to which the NodeB is connected.

3. The method according to claim 2, **characterized in that** the UE using the information to establish attachment with the selected PLMN comprises:
the UE analyzing the index number from the received RRC connection establishment message;
the UE converting the index number into a PLMN ID;
the UE sending an RRC connection completion message carrying a Non Access (NAS) message to the NodeB;
the NodeB sending the NAS message to a Mobility Management Entity (MME) of the selected PLMN; and
the UE using the PLMN ID of the selected PLMN to generate a Kasme, and using the generated Kasme to verify authentication and key agreement with the MME to complete the attachment.

4. A method for processing an emergency call attachment of an evolved packet system, **characterized by** comprising:
according to an emergency call request message received from a UE which is in a restricted state, a NodeB sending information of a plurality of PLMNs supporting emergency calls to the UE through an RRC connection establishment message;
the UE selecting one of the plurality of PLMNs supporting emergency calls according to the information; and
the UE establishing attachment with the selected PLMN.

5. The method according to claim 4, **characterized in that** according to an emergency call request message received from a UE which is in a restricted state, a NodeB sending information of a plurality of PLMNs supporting emergency calls to the UE through an RRC connection establishment message comprises: the NodeB sending index numbers of the plurality of PLMNs supporting emergency calls to the UE through an RRC connection establishment message.

6. The method according to claim 5, **characterized in that** the UE selecting one of the plurality of PLMNs supporting emergency calls according to the information comprises:
the UE analyzing the index numbers from the received RRC connection establishment message;
the UE converting the index numbers into PLMN IDs; and
the UE selecting one from the plurality of PLMNs identified by the PLMN IDs obtained through conversion.

7. The method according to claim 6, **characterized in that** the UE using the information to establish attachment with the selected PLMN comprises:
the UE sending the PLMN ID of the selected PLMN to the NodeB through an RRC connection completion message, wherein the RRC connection completion message carries an NAS message;
the NodeB sending the NAS message to a MME of the selected PLMN; and
the NodeB using the PLMN ID of the selected PLMN to generate a Kasme and using the generated Kasme to verify authentication and key agreement with the MME to complete the attachment.

8. An evolved packet system, **characterized by** comprising:
a NodeB, configured to, according to an emergency call request message received from a UE which is in a restricted state, select one from a plurality of PLMNs supporting emergency calls, and also configured to send information of the selected PLMN to the UE through an RRC connection establishment message; and
the UE, configured to use the information to establish attachment with the selected PLMN.

9. The system according to claim 8, **characterized in that**,
the NodeB comprises a first sending module, configured to send an index number of the selected PLMN in a PLMN ID list in a system message to the UE through the RRC connection establishment message, wherein the PLMN ID list is a list consisting of PLMN IDs of all PLMNs to which the NodeB is connected, and also configured to send an NAS message in an RRC connection completion message from the UE to an MME of the selected PLMN; and
the UE comprises:
an analyzing module, configured to analyze the index number from the received RRC connection establishment message and to convert the index number into a PLMN ID;
a second sending module, configured to send the RRC connection completion message carrying the NAS message to the NodeB; and
an execution module, configured to use the PLMN ID of the selected PLMN to generate a Kasme and to use the generated Kasme to verify authentication and key agreement with the MME to complete the attachment.

10. An evolved packet system, **characterized by** comprising:
a NodeB, configured to, according to an emergency call request message received from a UE which is in a restricted state, send information of a plurality of PLMNs supporting emergency calls to the UE through an RRC connection establishment message; and
the UE, configured to select one of the plurality of PLMNs supporting emergency calls according to the information, and also configured to establish attachment with the selected PLMN.

11. The system according to claim 10, **characterized in that**,
the NodeB comprises a first sending module, configured to send index numbers of the plurality of PLMNs supporting emergency calls to the UE through the RRC connection establishment message, and also configured to send an NAS message in an RRC connection completion message from the UE to an MME of the PLMN selected by the UE in the RRC connection completion message; and
the UE comprises:
an analyzing module, configured to analyze the index numbers from the received RRC connection establishment message and convert the index numbers into PLMN IDs;
a selection module, configured to select one from the plurality of PLMNs identified by the PLMN IDs obtained through conversion;
a second sending module, configured to send the PLMN ID of the selected PLMN to the NodeB through the RRC connection completion message, wherein the RRC connection completion message carries the NAS message; and
an execution module, configured to use the PLMN ID of the selected PLMN to generate a Kasme, and to use the generated Kasme to verify authentication and key agreement with the MME to complete the attachment.
